# EUROPÄISCHE PATENTSCHRIFT

(11) **EP 2 304 341 B1**
(45) Veröffentlichungstag und Bekanntmachung des Hinweises auf die Patenterteilung: **12.08.2015**
(21) Anmeldenummer: 09765825.6
(22) Anmeldetag: 16.06.2009
(51) Int. Cl.: F25B 17/08

(54) **VERFAHREN ZUM AUSFÜHREN EINER WÄRMEÜBERTRAGUNG ZWISCHEN ALTERNIEREND ARBEITENDEN ADSORBERN UND VORRICHTUNG**
METHOD FOR CARRYING OUT A HEAT TRANSFER BETWEEN ALTERNATELY WORKING ADSORBERS AND DEVICE
PROCÉDÉ DE TRANSMISSION THERMIQUE ENTRE DES ADSORBEURS TRAVAILLANT EN ALTERNANCE ET DISPOSITIF CORRESPONDANT

(30) Priorität: 19.06.2008 DE 102008029126
(43) Veröffentlichungstag der Anmeldung: 06.04.2011
(73) Patentinhaber: SorTech AG, 06120 Halle (DE)
(72) Erfinder: MITTELBACH, Walter, 79111 Freiburg (DE)
(74) Vertreter: Meissner, Bolte & Partner GbR
(86) Internationale Anmeldenummer: PCT/EP2009/057405
(87) Internationale Veröffentlichungsnummer: WO 2009/153245

(56) Entgegenhaltungen:
- EP-A1- 0 731 324
- WO-A1-2006/048558
- US-A- 5 024 064

## Beschreibung

Die Erfindung betrifft ein Verfahren zum Ausführen einer Wärmeübertragung zwischen alternierend arbeitenden Adsorbern in einer Adsorptionskälteanlage nach dem Oberbegriff des Anspruchs 1 und eine Vorrichtung zum Ausführen einer Wärmeübertragung zwischen alternierend arbeitenden Adsorbern nach dem Oberbegriff des Anspruchs 5.

Bei Adsorptionskälteanlagen mit alternierend arbeitenden Adsorbern muss im Verlauf des dort ablaufenden thermodynamischen Kreisprozesses eine Wärmeübertragung zwischen den beiden Adsorbern ausgeführt werden. Dies ist deswegen notwendig, um die Temperatur in jedem der beiden Adsorber für einen anstehenden Adsorptions- bzw. Desorptionsvorgang des umgetriebenen Kältefluids einzustellen und somit in den jeweils folgenden Teilschritt des Kreisprozesses überzugehen. Dazu wird bei den nach dem Stand der Technik bekannten Anlagen auf einen Heiz- und einen Kühlkreislauf zurückgegriffen. Über eine Ventilanordnung werden im Wechsel der erste bzw. der zweite Adsorber mit dem im Heiz- bzw. Kühlkreislauf zirkulierenden Medium so lange durchströmt, bis sich die Temperaturen in beiden Adsorbern angeglichen haben. Die US-A-5 024 064 zeigt ein Verfahren und eine Vorrichtung gemäß dem Oberbegriff der Ansprüche 1 bzw. 5.

Eine solche Vorgehensweise birgt eine Reihe gravierender Nachteile. Durch dir Zirkulation der Heiz- bzw. Kühlmedien in den externen, oftmals groß dimensionierten Kreisläufen treten eine Reihe von hydraulischen Nebeneffekten, wie beispielsweise Druckverluste bzw. Druckspitzen, auf, die die Wärmeübertragungsleistung zwischen dem jeweiligen Adsorber und dem Heiz- bzw. Kühlmedium begrenzen. Die hat unmittelbare Folgen auf die Einstellzeit der Temperaturgleichheit in beiden Adsorbern, diese wird unangemessen hoch, was sich auf die gesamte Kühlleistung der Adsorptionskälteanlage negativ auswirkt.

Zudem müssen zwei unabhängige externe Kreisläufe alternierend auf beide Adsorber geschaltet werden. Dies bringt einen hohen Kraftaufwand mit sich und erfordert entsprechend dimensionierte und damit teuere Ventileineinrichtungen. Zudem wird durch das alternierende Durchspülen der Adsorber mit dem Heiz- bzw. Kühlmedium eine unerwünschte hydraulische Durchmischung des Heiz- und Kühlkreislaufs bewirkt. Damit scheiden externe Heiz- und Kühlkreisläufe dann bei der Projektierung der Adsoptionskälteanlage aus, wenn diese von unterschiedlichen Medien durchströmt werden. Dadurch sind die Einsatzmöglichkeiten einer herkömmlichen Adsorptionskälteanlage begrenzt.

Es besteht somit die Aufgabe, ein Verfahren zum Ausführen einer Wärmeübertragung zwischen alternierend arbeitenden Adsorbern in einer Adsorptionskälteanlage mit einem externen Kühlkreislauf und Heizkreislauf anzugeben, bei dem die genannten Nachteile beseitigt werden. Es soll insbesondere eine Durchmischung der Medien aus den externen Kreisläufen vermieden und die Einstellzeiten für das Temperaturgleichgewicht zwischen beiden Adsorbern verkürzt und somit der Anlagenwirkungsgrad nachhaltig gesteigert werden.

Die Aufgabe wird hinsichtlich ihres Verfahrensaspektes mit einem Verfahren zum Ausführen einer Wärmeübertragung zwischen alternierend arbeitenden Adsorbern in einer Adsorptionskälteanlage mit einem externen Kühlkreislauf und einem externen Heizkreislauf mit den Merkmalen des Anspruchs 1 und hinsichtlich ihres Vorrichtungsaspektes mit einer Vorrichtung mit den Merkmalen des Anspruchs 5 gelöst. Die jeweiligen Unteransprüche beinhalten zweckmäßige bzw. vorteilhafte Ausführungsformen des Verfahrens bzw. der Vorrichtung.

Das erfindungsgemäße Verfahren zeichnet sich durch einen geschlossenen, zwischen den ersten und den zweiten Adsorber geschalteten Wärmeübertragungskreislauf mit einem darin zirkulierenden Wärmeübertragungsmedium aus. Dabei wird im Wärmeübertragungskreislauf über einen ersten Wärmekontakt eine Wärmeübertragung mit dem externen Kühlkreislauf und über einen zweiten Wärmekontakt eine Wärmeübertragung mit dem externen Heizkreislauf ausgeführt.

Im Gegensatz zu der aus dem Stand der Technik bekannten Vorgehensweise sind erfindungsgemäß der externe Kühl- und Heizkreislauf von den Adsorbern vollständig entkoppelt und abgetrennt. Vielmehr zirkuliert ein wärmeübertragendes Medium in einem Wärmeübertragungskreislauf durch die Adsorber und tauscht an dafür vorgesehenen Punkten Wärmeenergie mit den externen Kreisläufen aus.

Durch die damit grundsätzlich begrenzte Größe des Wärmeübertragungskreislaufs und die damit verbundene beschränkte Menge des zirkulierenden wärmeübertragenen Mediums verbessert sich das Schaltverhalten beim Ausführen der Wärmeübertragung zwischen den Adsorbern beträchtlich und ist von den hydrodynamischen Verhältnissen in den externen Kreisläufen vollständig entkoppelt. Dies bedingt kurze Ansprechzeiten, einen niedrigeren Kraftaufwand für die entsprechenden Ventileinrichtungen und eine weitgehende Vermeidung hydraulischer Nebeneffekte. Zudem ist eine Mischung der externen Kreisläufe ausgeschlossen. Diese können somit von ansich beliebigen Medien durchströmt werden, sofern diese den thermodynamischen Anforderungen der Adsorptionskälteanlage genügen.

Erfindungsgemäß führt der Wärmeübertragungskreislauf in einem Kreisprozess folgende Teilschritte auf:
In einem ersten Teilschritt wird das Wärmeübertragungsmedium im zweiten Wärmekontakt aufgeheizt und tritt in den ersten Adsorber ein. Gleichzeitig erfolgt ein Austritt des Wärmeübertragungsmediums aus dem zweiten Adsorber und ein Abkühlen des Mediums im ersten Wärmekontakt.

In diesem Teilschritt wird somit Wärmeenergie von den externen Heiz- und Kühlkreisläufen entnommen bzw. an diese abgeführt. Das Wärmeübertragungsmedium vermittelt über dessen Strömung einen thermischen Kontakt zwischen erstem bzw. zweitem Adsorber und zweitem bzw. erstem Wärmekontakt und damit dem externen Heiz- bzw. Kühlkreislauf.

In einem zweiten Teilschritt erfolgt ein Übertritt des Wärmeübertragungsmediums zwischen dem ersten Adsorber und dem zweiten Adsorber. Gleichzeitig tritt das Wärmeübertragungsmedium von dem ersten Wärmekontakt in den zweiten Wärmekontakt über.

Dieser Teilschritt markiert die Wärmeübertragung zwischen beiden Adsorbern. Gleichzeitig gelangt das im ersten Wärmekontakt im thermischen Kontakt mit dem externen Kühlkreislauf abgekühlte Medium in den zweiten Wärmekontakt und erfährt dort einen thermischen Kontakt mit dem externen Heizkreislauf.

In einem dritten Teilschritt wird das Wärmeübertragungsmedium in dem zweiten Wärmekontakt aufgeheizt und tritt nun in den zweiten Adsorber ein. Gleichzeitig erfolgt ein Austreten des Wärmeübertragungsmediums aus dem ersten Adsorber und ein Abkühlen des Wärmeübertragungsmediums im ersten Wärmekontakt.

Der dritte Teilschritt entspricht somit im Wesentlichen dem ersten Teilschritt, nur mit dem Unterschied, dass nunmehr der zweite Adsorber mit dem zweiten Wärmekontakt und somit dem externen Heizkreislauf und der erste Adsorber mit dem ersten Wärmekontakt und somit mit dem externen Kühlkreislauf in thermischen Kontakt gebracht wird.

In einem vierten Teilschritt tritt das Wärmeübertragungsmedium zwischen dem zweiten Adsorber und dem ersten Adsorber über. Gleichzeitig erfolgt ein Übertritt des Wärmeübertragungsmediums von dem ersten Wärmekontakt zu dem zweiten Wärmekontakt.

Der vierte Teilschritt entspricht somit dem zweiten Teilschritt des Verfahrens. Es werden somit über den Wärmeübertragungskreislauf innerhalb eines Zyklus einmal der erste und einmal der zweite Adsorber mit den externen Kühl- und Heizkreisläufen und dazwischen beide Adsorber miteinander in thermischen Kontakt gebracht. Sie werden dabei immer nur von einem Medium aus einem geschlossenen Kreislauf beaufschlagt.

Weiterhin erfolgt während des ersten bzw. dritten Teilschrittes beim jeweiligen Eintritt des Wärmeübertragungsmediums in den zweiten Adsorber bzw. den ersten Adsorber ein Kondensieren des Wärmeübertragungsmediums. Während des zweiten bzw. vierten Teilschrittes erfolgt beim Übertritt des Wärmeübertragungsmediums zwischen dem ersten Adsorber und dem zweiten Adsorber ein teilweises Verdampfen des Wärmeübertragungsmediums in jeweils einem der beiden Adsorber und ein Kondensieren im jeweils anderen Adsorber.

Bei einer besonders zweckmäßigen Ausführungsform des Verfahrens ist der zweite Wärmekontakt als ein Verdampfer und der erste Wärmekontakt als ein Kondensator ausgebildet. Dabei erfolgt in dem Verdampfer ein Verdampfen des Wärmeübertragungsmediums und in dem Kondensator ein Kondensieren des Wärmeübertragungsmediums.

Der Wärmeaustausch mit den externen Kreisläufen in Verbindung mit den dabei ablaufenden Phasenübergängen im Verdampfer und Kondensator erhöht die Wärmeübertragungsleistung in dem Wärmeübertragungskreislauf und somit den Wirkungsgrad der Adsorptionskältemaschine insgesamt beträchtlich. Dabei reduziert sich die Dauer des Wärmerückgewinnungsprozesses zwischen den beiden Adsorbern, d.h. die Zeitdauer des im Wärmeübertragungskreislauf abgewickelten Kreisprozesses, erheblich. Dies ist vor allem bei schnell schaltenden Adsorptionskälteanlagen von großer Bedeutung. Zudem strömt unter diesen Bedingungen das Wärmeübertragungsmedium in seiner Dampfphase durch die jeweiligen Adsorber. Dies bedingt einen erheblich niedrigeren Kraftaufwand bei der Regulierung der Strömungswege und ein weitaus gleichmäßigeres Strömungsverhalten, bei dem Druckspitzen vermieden werden.

Zweckmäßigerweise wird dabei das in dem Kondensator kondensierte Wärmeübertragungsmedium in einem zwischen dem Kondensator und dem Verdampfer zwischengeschalteten Kondensatbehälter gesammelt. Dadurch kann der Fluss des Wärmeübertragungsmediums zwischen Kondensator und Verdampfer in einfacher Weise reguliert werden.

Vorteilhaft ist ein Sammeln des flüssigen Wärmeübertragungsmediums im Kondensatbehälter unter der Wirkung der Schwerkraft. Dadurch können Pumpeinrichtungen entfallen.

Bei einer Ausführungsform ist der erste Adsorber durch einen ersten Wärmeübertrager und der zweite Adsorber durch einen zweiten Wärmeübertrager ersetzt. Dabei erfolgt in dem ersten und zweiten Wärmeübertrager ein alternierendes Verdampfen eines Kältemittels der Absorptionskälteanlage, wobei der Heizkreislauf durch den Kühlkreislauf ersetzt ist.

Eine Vorrichtung zum Ausführen einer Wärmeübertragung zwischen alternierend arbeitenden Adsorbern in einer Adsorptionskälteanlage mit einem externen Kühlkreislauf und einem externen Heizkreislauf zeichnet sich erfindungsgemäß durch eine Wärmerohranordnung mit einem darin zirkulierenden Wärmeübertragungsmedium in thermischer Kopplung mit dem externen Kühlkreislauf und dem externen Heizkreislauf aus.

Die Wärmerohranordnung weist zweckmäßigerweise folgende Komponenten auf: es ist ein erster Wärmekontakt im thermischen Kontakt mit dem Kühlkreislauf, ein mit dem ersten Wärmekontakt verbundener zweiter Wärmekontakt im thermischen Kontakt mit dem Heizkreislauf, eine erste Ventileinheit zwischen dem ersten Adsorber, dem zweiten Adsorber und dem zweiten Wärmekontakt und eine zweite Ventileinheit zwischen dem ersten Adsorber, dem zweiten Adsorber und dem ersten Wärmekontakt vorgesehen.

Der erste Wärmekontakt ist zweckmäßigerweise als ein Kondensator, der zweite Wärmekontakt als ein Verdampfer ausgebildet. Zusätzlich ist bei einer vorteilhaften Ausgestaltung ein zwischen den Kondensator und den Verdampfer geschalteter Kondensatbehälter vorgesehen.

Zweckmäßigerweise befindet sich ein zwischen dem Kondensator und dem Kondensatbehälter ein drittes Ventil und zwischen dem Kondensatbehälter und dem Verdampfer ein viertes Ventil. Dadurch kann der Fluß des kondensierten Wärmeübertragungsmediums zwischen dem Kondensator, dem Kondensatbehälter und dem Verdampfer geregelt werden.

Die Ventileinrichtungen realisieren dabei die folgenden, sich zyklisch wiederholenden Ventilzustände. Bei einem ersten Ventilzustand besteht eine offene Verbindung zwischen dem Verdampfer und dem ersten Adsorber, eine offene Verbindung zwischen dem zweiten Adsorber und dem Kondensator, bei einem zweiten Ventilzustand besteht eine offene Verbindung zwischen dem ersten Adsorber und dem zweiten Adsorber sowie eine offene Verbindung zwischen dem Kondensator und/oder dem Kondensatbehälter und dem Verdampfer, bei einem dritten Ventilzustand besteht eine offene Verbindung zwischen dem Verdampfer und dem zweiten Adsorber sowie eine offene Verbindung zwischen dem ersten Adsorber und dem Kondensator und bei einem vierten Ventilzustand ist der zweite Ventilzustand wieder eingestellt.

Im ersten und dritten Ventilzustand kann bei Vorliegen des Kondensatbehälters eine Verbindung zwischen dem Kondensator und dem Kondensatbehälter geöffnet sein. Hierdurch kann das anfallende kondensierte Wärmeübertragungsmedium außerhalb des Kondensators gesammelt und zwischengelagert werden.

Die erste Ventileinheit und/oder die zweite Ventileinheit sind als steuerbares Dreiwege-Ventil ausgebildet. Das dritte Ventil kann bei einer Ausführungsform ebenfalls ein steuerbares Dreiwege-Ventil sein.

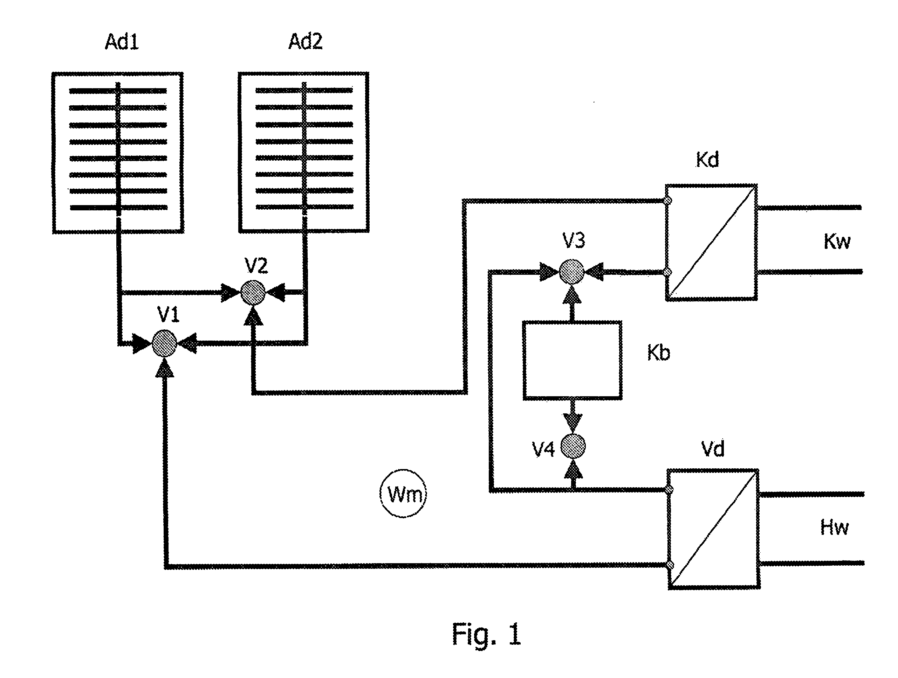

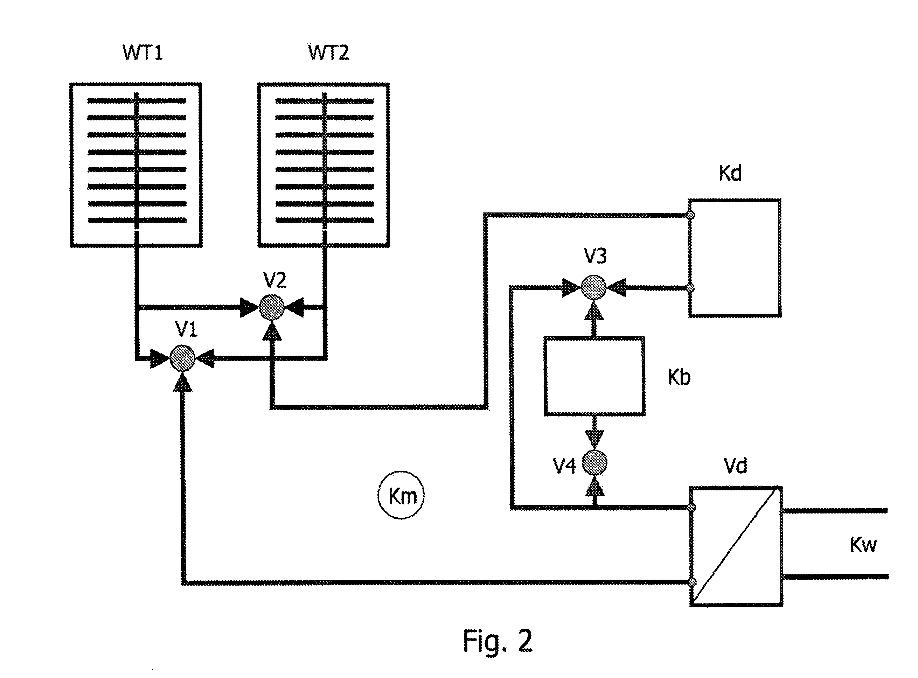

Das Verfahren und die Vorrichtung sollen nun anhand von Ausführungsbeispielen näher erläutert werden. Zur Verdeutlichung dienen die beigefügten Figuren 1 und 2. Es werden für gleiche oder gleichwirkende Teile die selben Bezugszeichen verwendet. Es zeigt
Fig. 1 eine von einem Wärmeübertragungsmedium durchströmte Wärmerohranordnung,
Fig. 2 eine Ausführungsform für ein in der Adsorptionskälteanlage umgetriebenes Kältemedium

Fig. 1 zeigt eine von einem Wärmeübertragungsmedium durchströmte Wärmerohranordnung zwischen einem ersten Adsorber Ad1, einem zweiten Adsorber Ad2, einem externen Kühlkreislauf Kw und einem externen Heizkreislauf Hw.

Die Wärmerohranordnung ist mit dem externen Kühlkreislauf über einem Kondensator Kd und mit dem externen Heizkreislauf über einen Verdampfer Vd thermisch gekoppelt. Es ist ein Kondensatbehälter Kb vorgesehen, der das im Kondensator verflüssigte Wärmeübertragungsmedium zunächst sammelt und anschließend an den Verdampfer ausgibt.

Zur Strömungsregulierung und zur Realisierung des in der Wärmerohranordnung ablaufenden Arbeitsprozesses dienen eine Reihe von Ventileinheiten. Eine erste Ventileinheit V1 steuert die Zufuhr des Wärmeübertragungmediums von dem Verdampfer Vd zu dem Adsorber Ad1 bzw. Ad2 und den Fluss des Wärmeübertragungsmediums zwischen den beiden Adsorbern Ad1 und Ad2. Eine zweite Ventileinheit V2 steuert die Weiterleitung des Wärmeübertragungsmediums von dem Adsorber Ad1 bzw. Ad2 zu dem Kondensator Kd und den Fluß des Mediums zwischen beiden Adsorbern.

Eine dritte Ventileinheit öffnet bzw. schließt eine Verbindung zwischen dem Kondensator Kd und dem Kondensatbehälter Kb bzw. zwischen dem Kondensatbehälter Kb und dem Verdampfer Vd. Eine vierte Ventileinheit schließlich öffnet bzw. schließt eine weitere Verbindung zwischen dem Kondensatbehälter und dem Verdampfer.

Bei dem hier vorliegenden Beispiel sind die Ventileinheiten V1 und V2 jeweils als Dreiwege-Ventile ausgebildet, die über eine hier nicht gezeigte Steuereinheit angesprochen und geschaltet werden. Dies kann insbesondere auf elektromechanischem, pneumatischem oder auch hydraulischem Wege ausgeführt werden.

Die dritte Ventileinheit V3 ist in diesem Beispiel als ein Dreiwege-Ventil ausgebildet, das auf der Oberseite des Kondensatbehälters Kb angeordnet ist und sowohl den Zufluss vom Kondensator Kd, als auch den Abfluss des Mediums zum Verdampfer Vd regelt. Eine derartige Lage der Ventileinheit V3 ist zweckmäßig, um eine selbstregulierende Fließrate des Wärmeübertragungsmediums aus dem Kondensatbehälter zum Verdampfer zu erreichen. Bei der hier gezeigten Anordnung wird das flüssige Medium im Kondensatbehälter durch den infolge der Verdampfung des Mediums im Verdampfer entstehenden Unterdruck angesaugt, wobei die Fließrate des flüssigen Mediums zwischen Kondensatbehälter und Verdampfer direkt von der Verdampfungsrate des Mediums im Verdampfer abhängt. Wie die Ventileinheiten V1 und V2 wird auch diese Ventileinheit von der Steuereinheit angesprochen und ist auf elektromechanischem, pneumatischem oder hydraulischem Wege schaltbar.

Die vierte Ventileinheit V4 gewährleistet eine direkte Weiterleitung des flüssigen Wärmeüberragungsmediums vom Kondensatbehälter zum Verdampfer. Zweckmäßig ist in diesem Zusammenhang eine Konfiguration, bei der der Kondensator Kd über dem Kondensatbehälter Kb und dieser über dem Verdampfer Vd, oder zumindest auf dessen Höhenniveau angeordnet ist. Bei einer solchen Konfiguration kann das flüssige Wärmeübertragungsmedium allein durch die Wirkung der Schwerkraft in den Kondensatbehälter rinnen bzw. bei Bedarf weiter in den Verdampfer Vd hinabfallen.

Die verschiedenen Arbeitstakte der Wärmerohranordnung sind durch die Stellungen der Ventileinheiten V1, V2, V3 und V4 festgelegt. Dabei sind für die Ventileinheiten V1 und V2 drei verschiedene Stellungen und für die Ventileinheiten V3 und V4 zwei verschiedene Stellungen vorgesehen.

Diese werden für die folgende Darstellung für die Ventileinheit V1 wie folgt definiert:
Bei der Stellung V1-1 ist die Verbindung zwischen dem Adsorber Ad1 und dem Verdampfer Vd geöffnet und die Verbindung zwischen dem Adsorber Ad2 und dem Verdampfer Vd geschlossen. Bei der Stellung V1-2 ist die Verbindung zwischen dem Adsorber Ad2 und dem Verdampfer Vd geöffnet und die Verbindung zwischen dem Adsorber Ad1 und dem Verdampfer Vd geschlossen. Bei der Stellung V1-3 ist die Verbindung zwischen den Adsorbern Ad1 und Ad2 geöffnet und deren Verbindung zum Verdampfer Vd geschlossen.

Für die Ventileinheit V2 werden folgende Ventilstellungen definiert:
Bei der Stellung V2-1 ist die Verbindung zwischen dem Adsorber Ad1 und dem Kondensator Kd geöffnet und die Verbindung zwischen dem Adsorber Ad2 und dem Kondensator Kd geschlossen. Bei der Stellung V2-2 ist die Verbindung zwischen dem Adsorber Ad1 und dem Kondensator Kd geschlossen und die Verbindung zwischen dem Adsorber Ad2 und dem Kondensator Kd geöffnet. Bei der Stellung V2-3 ist die Verbindung zwischen den Adsorbern Ad1 und Ad2 geöffnet und deren Verbindungen zum Kondensator Kd sind geschlossen.

Die Ventileinheit V3 kann folgende Ventilstellungen einnehmen:
Bei der Stellung V3-1 ist die Verbindung zwischen dem Kondensator Kd und dem Kondensatbehälter Kb geöffnet und die Verbindung zwischen dem Kondensatbehälter Kb und dem Verdampfer Vd geschlossen. Bei der Stellung V3-2 der Ventileinheit V3 ist die Verbindung zwischen dem Kondensatbehälter Kb und dem Verdampfer Vd offen und die Verbindung zwischen dem Kondensator Kd und dem Kondensatbehälter Kb geschlossen.

Schließlich sind für die Ventileinheit V4 folgende Ventilstellungen definiert:
Bei der Stellung V4-1 ist die Verbindung zwischen dem Kondensatbehälter Kb und dem Verdampfer Vd geöffnet. Bei der Stellung V4-2 ist die Verbindung zwischen dem Kondensatbehälter Kb und dem Verdampfer Vd geschlossen.

Die beschriebenen Ventilstellungen und die in den einzelnen Schritten des Arbeitszyklus notwendigen Schaltzustände der in der Vorrichtung vorhandenen Ventileinheiten lassen sich natürlich durch eine Vielzahl anderer Ventilbauformen realisieren, die dem Fachmann bekannt sind. Wegen der in jedem Teilschritt genau festgelegten Verknüpfung der Schaltstellungen der Ventileinheiten V1 bis V4 ist insbesondere eine alle Ventile umfassende kompakte Bauform in Form eines Spezialventils oder eines Ventilmoduls möglich, das die beschriebenen Schaltstellungen realisiert und in welchem die genannten Ventileinheiten baulich vereinigt sind.

Der in der Wärmerohranordnung ablaufende Kreisprozess wird unter Beachtung der vorab definierten Ventilstellungen beispielhaft folgendermaßen ausgeführt: In einem ersten Schritt erfolgt eine Desorption des Wärmeübertragungsmediums im Adsorber Ad1 und eine Adsorption des Mediums im Adsorber Ad2. Die erste Ventileinheit V1 befindet sich dabei in der Stellung V1-1, die zweite Ventileinheit V2 in der Stellung V2-2, die dritte Ventileinheit V3 in der Stellung V3-1 und die vierte Ventileinheit V4 in der Stellung V4-2. Das Wärmeübetragungsmedium wird im Verdampfer Vd im thermischen Kontakt mit dem Heizkreislauf Hw verdampft und gelangt in den Adsorber Ad1, wo es kondensiert. Gleichzeitig verdampft das Medium im Adsorber Ad2 und gelangt in den Kondensator Kd, wo es im thermischen Kontakt mit dem externen Kühlkreislauf Kw kondensiert. Das im Kondensator verflüssigte Wärmeübertragungsmedium gelangt in den Kondensatbehälter Kb und wird dort gesammelt. Der erste Schritt wird dann beendet, wenn der Adsorber Ad1 eine im Verdampfer herrschende, durch den externen Heizkreislauf Hw bestimmte Temperatur T_{HAd1} und der Adsorber Ad2 eine im Kondensator herrschende, durch den externen Kühlkreislauf Kw bestimmte Temperatur T_{KAd2} angenommen hat.

Im zweiten Schritt erfolgt eine Wärmerückgewinnung zwischen dem Adsorber Ad1 und dem Adsorber Ad2. Die erste Ventileinheit befindet sich dabei in der Stellung V1-3, die zweite Ventileinheit in der Stellung V2-3, die dritte Ventileinheit in der Stellung V3-2 und die vierte Ventileinheit in der Stellung V4-2. Die Adsorber Ad1 und Ad2 sind nun direkt miteinander verbunden und sowohl gegenüber dem Verdampfer Vd und dem Kondensator Kd abgesperrt. Ein Teil des Wärmeübertragungsmediums im Adsorber Ad1 verdampft und kondensiert im Adsorber Ad2. In der Folge nehmen die Adsorber Ad1 und Ad2 eine gleiche Temperatur T_{G} an. Der zweite Schritt ist abgeschlossen, wenn die Temperatur T_{G} erreicht ist. Gleichzeitig wird das im Kondensatbehälter Kb gesammelte flüssige Wärmeübertragungsmedium in den Verdampfer Vd geleitet.

Im dritten Schritt erfolgt eine Desorption im Adsorber Ad2 und eine Adsorption im Adsorber Ad1. Die erste Ventileinheit befindet sich dabei in der Stellung V1-2, die zweite Ventileinheit in der Stellung V2-1, die dritte Ventileinheit in der Stellung V3-1 und die vierte Ventileinheit in der Stellung V4-2. Das in den Verdampfer Vd von dem Kondensatbehälter Kb eintretende Wärmeübertragungsmedium verdampft im thermischen Kontakt mit dem externen Heizkreislauf Hw und gelangt in den Adsorber Ad2, wo es kondensiert. Gleichzeitig verdampft das Wärmeübertragungsmedium im Adsorber Ad1 und gelangt in den Kondensator Kd. Dort kondensiert es im thermischen Kontakt mit dem Kühlkreislauf Kw. Das dort kondensierte Wärmeübertragungsmedium rinnt in den Kondensatbehälter Kb und wird dort gesammelt. Dieser Schritt kommt zum Abschluss, wenn der Adsorber Ad2 die im Verdampfer Vd und damit im Heizkreislauf Hw herrschende Temperatur T_{HAd2} und der Verdampfer Ad1 die im Kondensator Kd herrschende und durch den Kühlkreislauf Kw bestimmte Temperatur T_{KAd1} angenommen hat.

Im vierten Schritt erfolgt eine Wärmerückgewinnung zwischen dem Adsorber Ad2 und dem Adsorber Ad1. Die erste Ventileinheit befindet sich dabei in der Stellung V1-3, die zweite Ventileinheit in der Stellung V2-3, die dritte Ventileinheit in der Stellung V3-2 und die vierte Ventileinheit in der Stellung V4-2. Die Adsorber Ad2 und Ad1 sind nun direkt miteinander verbunden und sowohl gegenüber dem Verdampfer Vd und dem Kondensator Kd abgesperrt. Ein Teil des Wärmeübertragungsmediums im Adsorber Ad2 verdampft und kondensiert im Adsorber Ad1. In der Folge nehmen die Adsorber Ad1 und Ad2 eine gleiche Temperatur T_{G} an. Der zweite Schritt ist abgeschlossen, wenn die Temperatur T_{G} erreicht ist. Gleichzeitig wird das im Kondensatbehälter Kb gesammelte flüssige Wärmeübertragungsmedium in den Verdampfer Vd geleitet. Damit ist der Arbeitszyklus geschlossen und es schließt sich nunmehr wieder der erste Schritt an.

Dabei wird die Temperatur des Wärmeübertragungsmediums in den Adsorbern, dem Kondensator und dem Verdampfer kontinuierlich über Temperatursensoren erfasst und einer hier nicht dargestellten Steuereinheit übermittelt, die im Ergebnis eines internen Programmablaufs Schaltsignale an die Ventileinheiten abgibt und die entsprechenden Ventilstellungen bewirkt.

Wie aus der geschilderten Schrittfolge hervorgeht, ist der Wärmeübergang zwischen dem Wärmeübertragungsmedium und dem Kühlkreislauf im Kondensator Kd, dem Heizkreislauf im Verdampfer Vd bzw. in den Adsorbern Ad1 und Ad2 mit einem Phasenübergang verbunden. Dabei zirkuliert das Wärmeübertragungsmedium zwischen in dem zwischen den Adsorbern und dem Kondensator bzw. zwischen den Adsorbern und dem Verdampfer gelegenen Abschnitt des Wärmerohrs und auch in dem zwischen den Adsorbern gelegenen Abschnitt in gasförmiger, bzw. in Dampfform und liegt ausschließlich in dem zwischen dem Kondensator und dem Verdampfer gelegenen, relativ kurzen Abschnitt in flüssiger Form vor. Dies bedingt einen besonders niedrigen Kraftaufwand mit minimalen Schaltzeiten beim Schalten der Ventileinheiten V1 und V2, während der zwischen dem Kondensator Kd und dem Verdampfer Vd gelegene Fluss des Fluids fast ausschließlich unter der Wirkung der Schwerkraft erfolgt. Es können kleinere Ventile bei einer vergleichbaren Wärmeleistung eingesetzt werden. Da die hydraulischen externen Kreisläufe Kw und Hw getrennt bleiben, bleiben Druckspitzen infolge eines Schaltens von Ventilen in diesen Kreisläufen vollständig aus.

Durch die Verwendung von Phasenübergängen im Wärmeübertragungsmedium reduziert sich die Dauer des Wärmerückgewinnungsprozesses zwischen den Adsorbern in dem zweiten und vierten Schritt des Arbeitszyklus erheblich. Dies ist vor allem bei schnell schaltenden Adsorptionskältemaschinen von großem Vorteil. Außerdem können der Kondensator Kd und der Verdampfer Vd in ihren hydraulischen Eigenschaften, insbesondere hinsichtlich eines Druckverlustes, und ihren Wärmeübertragungsleistungen unabhängig von der Bauform der Adsorber entworfen und optimiert werden. Hier bietet sich insbesondere ein Einsatz von Plattenwärmeübertragern an.

Fig. 2 zeigt eine zum Umtreiben eines Kältemittels Km innerhalb der Adsorptionskälteanlage geeignete Ausführungsform. Die in der Figur gezeigte Ausführungsform eines Kältemittelkreislaufs entspricht in ihrem Aufbau im Wesentlichen der in Fig. 1 gezeigten Wärmerohranordnung. Bei der hier vorliegenden Ausführungsform treten allerdings an die Stelle der bisher genannten Adsorber zwei Wärmetauscher WT1 und WT2. Diese führen ein Verdampfen und Kondensieren des Kältemittels Km aus und sind thermisch mit den Adsorbern Ad1 und Ad2 der vorher genannten Anordnung gekoppelt. Alle übrigen Komponenten und Arbeitsabläufe im Kreisprozess entsprechen der genannten Wärmerohranordnung aus Fig. 1. Allerdings koppelt bei der hier genannten Ausführungsform der Verdampfer Vd des Kältemittelkreislaufs an den in Fig. 1 genannten Kühlkreislauf Kw, während der Kondensator Kd in diesem Ausführungsbeispiel eine thermische Kopplung mit der Umgebung der Adsorptionskälteanlage aufweist.

Die Art des Wärmeübertragungsmediums in der Ausführungsform nach Fig. 1 bzw. des Kältemittels in der Ausführungsform nach Fig. 2 hängt von den genauen Einsatzbedingungen, insbesondere von den an dem Kondensator und dem Verdampfer anliegenden und durch die externen Kreisläufe bestimmten Temperaturen und dem innerhalb der Leitung herrschenden Druck sowie der Verdampfungswärme der Medien bzw. der Heiz- bzw. Kühlleistung am Verdampfer bzw. Kondensator bzw. den Adsorbern und den Wärmetauschern ab. Eine Verwendung von Wasser ist ebenso möglich, wie beispielsweise von Ammoniak oder Wasser-Ammoniak-Gemischen. Dies ist im Rahmen fachmännischen Handelns bei der Planung der Vorrichtung bzw. des Verfahrens zu berücksichtigen.

Weitere Ausführungsformen ergeben sich durch fachmännisches Handeln und aus den Unteransprüchen.

### Bezugszeichenliste

- Ad1: erster Adsorber
- Ad2: zweiter Adsorber
- Kb: Kondensatbehälter
- Kd: Kondensator
- Km: Kältemittel
- V1: erste Ventileinheit
- V2: zweite Ventileinheit
- V3: dritte Ventileinheit
- V4: vierte Ventileinheit
- Wm: Wärmeübertragungsmedium
- WT1: erster Wärmetauscher
- WT2: zweiter Wärmetauscher

## Patentansprüche

1. Verfahren zum Ausführen einer Wärmeübertragung zwischen alternierend arbeitenden Adsorbern (Ad1, Ad2) in einer Adsorptionskälteanlage mit einem externen Kühlkreislauf (Kw) und einem externen Heizkreislauf (Hw),
einem geschlossenen, zwischen einen ersten Adsorber (Ad1) und einen zweiten Adsorber (Ad2) geschalteten Wärmeübertragungskreislauf mit einem darin zirkulierenden Wärmeübertragungsmedium (Wm), wobei im Wärmeübertragungskreislauf über einen ersten Wärmekontakt eine Wärmeübertragung mit dem externen Kühlkreislauf (Kw) und über einen zweiten Wärmekontakt eine Wärmeübertragung mit dem externen Heizkreislauf (Hw) ausgeführt wird, wobei der Wärmeübertragungskreislauf folgende Teilschritte in einem Kreisprozess ausführt:
- erster Teilschritt: Aufheizen des Wärmeübertragungsmediums (Wm) im zweiten Wärmekontakt und Eintritt des Wärmeübertragungsmediums in den ersten Adsorber (Ad1), gleichzeitig Austritt des Wärmeübertragungsmediums (Wm) aus dem zweiten Adsorber (Ad2) und Abkühlen des Wärmeübertragungsmediums im ersten Wärmekontakt,
- zweiter Teilschritt: Übertritt des Wärmeübertragungsmediums (Wm) zwischen dem ersten Adsorber (Ad1) und dem zweiten Adsorber (Ad2), gleichzeitig Übertritt des Wärmeübertragungsmediums (Wm) von dem ersten Wärmekontakt in den zweiten Wärmekontakt,
- dritter Teilschritt: Aufheizen des Wärmeübertragungsmediums (Wm) im zweiten Wärmkontakt und Eintritt des Wärmeübertragungsmediums in den zweiten Adsorber (Ad2), gleichzeitig Austritt des Wärmeübertragungsmediums (Wm) aus dem ersten Adsorber (Ad1) und Abkühlen des Wärmeübertragungsmediums im ersten Wärmekontakt,
- vierter Teilschritt: Übertritt des Wärmeübertragungsmediums (Wm) zwischen dem zweiten Adsorber (Ad2) und dem ersten Adsorber (Ad1), gleichzeitig Übertritt des Wärmeübertragungsmediums (Wm) von dem ersten Wärmekontakt in den zweiten Wärmekontakt, **dadurch gekennzeichnet daß** während des ersten bzw. dritten Teilschrittes beim jeweiligen Eintritt des Wärmeübertragungsmediums in den zweiten Adsorber (Ad2) bzw. den ersten Adsorber (Ad1) ein Kondensieren des Wärmeübertragungsmediums (Wm) erfolgt und während des zweiten bzw. vierten Teilschrittes beim Übertritt des Wärmeübertragungsmediums zwischen dem ersten Adsorber (Ad1) und dem zweiten Adsorber (Ad2) ein teilweises Verdampfen des Wärmeübertragungsmediums in jeweils einem der beiden Adsorber und ein Kondensieren im jeweils anderen Adsorber erfolgt.

2. Verfahren nach Anspruch 1,
**dadurch gekennzeichnet, dass**
der zweite Wärmekontakt als ein Verdampfer (Vd) und der erste Wärmekontakt als ein Kondensator (Kd) ausgebildet ist, wobei in dem Verdampfer (Vd) ein Verdampfen des Wärmeübertragungsmediums (Wm) und in dem Kondensator ein Kondensieren des Wärmeübertragungsmediums (Wm) erfolgt.

3. Verfahren nach einem der vorhergehenden Ansprüche,
**dadurch gekennzeichnet, dass**
das in dem Kondensator (Kd) kondensierte Wärmeübertragungsmedium (Wm) in einem zwischen Kondensator und Verdampfer zwischengeschalteten Kondensatbehälter (Kb) gesammelt wird.

4. Verfahren nach Anspruch 3,
**dadurch gekennzeichnet, dass**
das Sammeln des flüssigen Wärmeübertragungsmediums (Wm) im Kondensatbehälter (Kb) unter der Wirkung der Schwerkraft erfolgt.

5. Vorrichtung zum Ausführen einer Wärmeübertragung,gemäß dem Verfahren nach einem der Ansprüche 1 bis 4, zwischen alternierend arbeitenden Adsorbern (Ad1, Ad2) in einer Adsorptionskälteanlage mit einem externen Kühlkreislauf (Kw) und einem externen Heizkreislauf (Hw), ,
**gekennzeichnet durch** einen geschlossenen, zwischen einen ersten Adsorber (Ad1) und einen zweiten Adsorber (Ad2) geschalteten Wärmeübertragungskreislauf mit einem darin zirkulierenden Wärmeübertragungsmedium (Wm), wobei im Wärmeübertragungskreislauf über einen ersten Wärmekontakt eine Wärmeübertragung mit dem externen Kühlkreislauf (Kw) und über einen zweiten Wärmekontakt eine Wärmeübertragung mit dem externen Heizkreislauf (Hw) ausgeführt wird, wobei
eine Wärmerohranordnung mit dem darin zirkulierenden Wärmeübertragungsmedium (Wm)thermisch mit dem externen Kühlkreislauf (Kw) und dem externen Heizkreislauf (Hw) gekoppelt ist.

6. Vorrichtung nach Anspruch 5,
**dadurch gekennzeichnet, dass**
die Wärmerohranordnung folgende Komponenten aufweist: einen ersten Wärmekontakt im thermischen Kontakt mit dem Kühlkreislauf (Kw), einen mit dem ersten Wärmekontakt verbundenen zweiten Wärmekontakt im thermischen Kontakt mit dem Heizkreislauf (Hw), eine erste Ventileinheit (V1) zwischen erstem Adsorber (Ad1), zweitem Adsorber (Ad2) und zweitem Wärmekontakt und eine zweite Ventileinheit (V2) zwischen erstem Adsorber, zweitem Adsorber und erstem Wärmekontakt.

7. Vorrichtung nach einem der Ansprüche 5 oder 6,
**dadurch gekennzeichnet, dass**
der erste Wärmekontakt der Kondensator (Kd) und der zweite Wärmekontakt der Verdampfer (Vd) ist.

8. Vorrichtung nach Anspruch 7,
**gekennzeichnet durch**
den zwischen den Kondensator (Kd) und den Verdampfer (Vd) geschalteten Kondensatbehälter (Kb).

9. Vorrichtung nach einem der Ansprüche 5 bis 8,
**gekennzeichnet durch**
ein zwischen Kondensator (Kd) und Kondensatbehälter (Kb) angeordnetes drittes Ventil (V3) und ein zwischen Kondensatbehälter und Verdampfer (Vd) angeordnetes viertes Ventil (V4).

10. Vorrichtung nach Anspruch 6 bis 9,
**dadurch gekennzeichnet, dass**
die Ventileinrichtungen (V1, V2, V3, V4) folgende, sich zyklisch wiederholende Ventilzustände realisieren:
- erster Ventilzustand: offene Verbindung zwischen Verdampfer (Vd) und erstem Adsorber (Ad1), offene Verbindung zwischen zweitem Adsorber (Ad2) und Kondensator (Kd),
- zweiter Ventilzustand: offene Verbindung zwischen erstem Adsorber und zweitem Adsorber, offene Verbindung zwischen Kondensator (Kd) und/oder Kondensatbehälter (Kb) und Verdampfer (Vd),
- dritter Ventilzustand: offene Verbindung zwischen Verdampfer (Vd) und zweitem Adsorber (Ad2), offene Verbindung zwischen erstem Adsorber (Ad1) und Kondensator (Kd),
- vierter Ventilzustand: wie zweiter Ventilzustand.

11. Vorrichtung nach Anspruch 10,
**dadurch gekennzeichnet, dass**
im ersten und dritten Ventilzustand eine Verbindung zwischen dem Kondensator (Kd) und dem Kondensatbehälter (Kb) geöffnet ist.

12. Vorrichtung nach Anspruch 6,
**dadurch gekennzeichnet, dass**
die erste Ventileinheit (V1) und/oder die zweite Ventileinheit (V2) als ein steuerbares Dreiwege-Ventil ausgebildet sind.

13. Vorrichtung nach einem der Ansprüche 9 bis 12,
**dadurch gekennzeichnet, dass**
das dritte Ventil (V3) ein steuerbares Dreiwege-Ventil ist.

## Claims

1. A method for carrying out a heat transfer between alternately working adsorbers (Ad1, Ad2) in an adsorption-type refrigeration system having an external cooling circuit (Kw) and an external heating circuit (Hw),
a closed heat transfer circuit connected in between a first adsorber (Ad1) and a second adsorber (Ad2), having a heat transfer medium (Wm) circulating therein, wherein in said heat transfer circuit, a heat transfer with the external cooling circuit (Kw) is carried out via a first heat contact, and a heat transfer with the external heating circuit (Hw) is carried out via a second heat contact, wherein the heat transfer circuit carries out the following partial steps in a cyclic process:
- first partial step: heating the heat transfer medium (Wm) in the second heat contact, and introducing the heat transfer medium into the first adsorber (Ad1), simultaneously discharging the heat transfer medium (Wm) from the second adsorber (Ad2) and cooling the heat transfer medium in the first heat contact,
- second partial step: transferring the heat transfer medium (Wm) between the first adsorber (Ad1) and the second adsorber (Ad2), simultaneously transferring the heat transfer medium (Wm) from the first heat contact into the second heat contact,
- third partial step: heating the heat transfer medium (Wm) in the second heat contact und introducing the heat transfer medium (Wm) into the second adsorber (Ad2), simultaneously discharging the heat transfer medium (Wm) from the first adsorber (Ad1) and cooling the heat transfer medium in the first heat contact,
- fourth partial step: transferring the heat transfer medium (Wm) between the second adsorber (Ad2) and the first adsorber (Ad1), simultaneously transferring the heat transfer medium (Wm) from the first heat contact into the second heat contact,
**characterized in that** during the first and third partial steps, respectively, when the heat transfer medium is introduced respectively into the second adsorber (Ad2) and the first adsorber (Ad1), condensation of the heat transfer medium (Wm) takes place, and during the second and fourth partial steps, respectively, when the heat transfer medium is transferred between the first adsorber (Ad1) and the second adsorber (Ad2), partial evaporation of the heat transfer medium takes place in each case in one of the two adsorbers, and condensation takes place in the respective other adsorber.

2. The method according to claim 1,
**characterized in that**
the second heat contact is realized as an evaporator (Vd), and the first heat contact is realized as a condenser (Kd), wherein evaporation of the heat transfer medium (Wm) takes place in the evaporator (Vd), and condensation of the heat transfer medium (Wm) takes place in the condenser.

3. The method according to any one of the preceding claims,
**characterized in that**
the heat transfer medium (Wm) condensed in the condenser (Kd) is collected in a condensate container (Kb) interconnected between the condenser and evaporator.

4. The method according to claim 3,
**characterized in that**
the collecting of the liquid heat transfer medium (Wm) in the condensate container (Kb) takes places under the effect of gravity.

5. A device for carrying out a heat transfer according to the method of any one of claims 1 to 4 between alternately working adsorbers (ad1, Ad2) in an adsorption-type refrigeration system having an external cooling circuit (Kw) and an external heating circuit (Hw),
**characterized by** a closed heat transfer circuit connected in between a first adsorber (Ad1) and a second adsorber (Ad2), having a heat transfer medium (Wm) circulating therein, wherein in said heat transfer circuit, a heat transfer with the external cooling circuit (Kw) is carried out via a first heat contact, and a heat transfer with the external heating circuit (Hw) is carried out via a second heat contact, wherein
a heat pipe arrangement having the heat transfer medium (Wm) circulating therein is thermally coupled with the external cooling circuit (Kw) and the external heating circuit (Hw).

6. The device according to claim 5,
**characterized in that**
the heat pipe arrangement exhibits the following components: a first heat contact in thermal contact with the cooling circuit (Kw), a second heat contact associated to the first heat contact and being in thermal contact with the heating circuit (Hw), a first valve unit (V1) between the first adsorber (Ad1), second adsorber (Ad2) and second heat contact, and a second valve unit (V2) between the first adsorber, second adsorber and first heat contact.

7. The device according to any one of claims 5 or 6,
**characterized in that**
the first heat contact is the condenser (Kd) and the second heat contact is the evaporator (Vd).

8. The device according to claim 7,
**characterized by**
the condensate container (Kb) connected in between the condenser (Kd) and evaporator (Vd).

9. The device according to any one of claims 5 to 8,
**characterized by**
a third valve (V3) arranged between the condenser (Kd) and condensate container (Kb), and a fourth valve (V4) arranged between the condensate container and evaporator (Vd).

10. The device according to claims 6 to 9,
**characterized in that**
said valve means (V1, V2, V3, V4) realize the following cyclically repeating valve states:
- first valve state: open connection between evaporator (Vd) and first adsorber (Ad1), open connection between second adsorber (Ad2) and condenser (Kd),
- second valve state: open connection between first adsorber and second adsorber, open connection between condenser (Kd) and/or condensate container (Kb) and evaporator (Vd),
- third valve state: open connection between evaporator (Vd) and second adsorber (Ad2), open connection between first adsorber (Ad1) and condenser (Kd),
- fourth valve state: same as second valve state.

11. The device according to claim 10,
**characterized in that**
in the first and third valve states, a connection between the condenser (Kd) and condensate container (Kb) is opened.

12. The device according to claim 6,
**characterized in that**
the first valve unit (V1) and/or the second valve unit (V2) are realized as a controllable three-way valve.

13. The device according to any one of claims 9 to 12,
**characterized in that**
the third valve (V3) is a controllable three-way valve.

## Revendications

1. Procédé pour effectuer une transmission thermique entre des adsorbeurs fonctionnant en alternance (Ad1, Ad2) dans une installation frigorifique par adsorption avec un circuit de refroidissement externe (Kw) et un circuit de chauffage externe (Hw),
un circuit de transmission thermique fermé branché entre un premier adsorbeur (Ad1) et un second adsorbeur (Ad2) avec un milieu de transmission thermique (Wm) circulant à l'intérieur de celui-ci, dans lequel on exécute dans le circuit de transmission thermique une transmission thermique avec le circuit de refroidissement externe (Kw) via un premier contact thermique, et on exécute une transmission thermique avec le circuit de chauffage externe (Hw) via un second contact thermique, dans lequel le circuit de transmission thermique exécute les étapes partielles suivantes dans un processus en boucle :
- première étape partielle : chauffage du milieu de transmission thermique (Wm) dans le second contact thermique et entrée du milieu de transmission thermique dans le premier adsorbeur (Ad1), simultanément sortie du milieu de transmission thermique (Wm) hors du second adsorbeur (Ad2), et refroidissement du milieu de transmission thermique dans le premier contact thermique,
- seconde étape partielle : transfert du milieu de transmission thermique (Wm) entre le premier adsorbeur (Ad1) et le second adsorbeur (Ad2), simultanément transfert du milieu de transmission thermique (Wm) depuis le premier contact thermique jusque dans le second contact thermique,
- troisième étape partielle : chauffage du milieu de transmission thermique (Wm) dans le second contact thermique et entrée du milieu de transmission thermique dans le second adsorbeur (Ad2), simultanément sortie du milieu de transmission thermique (Wm) hors du premier adsorbeur (Ad1) et refroidissement du milieu de transmission thermique dans le premier contact thermique,
- quatrième étape partielle : transfert du milieu de transmission thermique (Wm) entre le second adsorbeur (Ad2) et le premier adsorbeur (Ad1), simultanément transfert du milieu de transmission thermique (Wm) depuis le premier contact thermique jusque dans le second contact thermique,
**caractérisé en ce que** pendant la première ou la troisième étape partielle, lors de l'entrée respective du milieu de transmission thermique dans le second adsorbeur (Ad2) ou respectivement le premier adsorbeur (Ad1) il se produit une condensation du milieu de transmission thermique (Wm) et pendant la seconde ou la quatrième étape partielle, lors du transfert du milieu de transmission thermique entre le premier adsorbeur (Ad1) et le second adsorbeur (Ad) il se produit une évaporation partielle du milieu de transmission thermique respectivement dans l'un des deux adsorbeurs et une condensation respectivement dans l'autre adsorbeur.

2. Procédé selon la revendication 1,
**caractérisé en ce que** le second contact thermique est réalisé sous forme d'évaporateur (Vd) et le second contact thermique est réalisé sous forme de condenseur (Kd), il se produit dans l'évaporateur (Vd) une évaporation du milieu de transmission thermique (Wm), et il se produit dans le condenseur une condensation du milieu de transmission thermique (Wm).

3. Procédé selon l'une des revendications précédentes,
**caractérisé en ce que** le milieu de transmission thermique (Wm) condensé dans le condenseur (Kd) est collecté dans un réservoir à condensat (Kb) interposé entre le condenseur et l'évaporateur.

4. Procédé selon la revendication 3,
**caractérisé en ce que** la collecte du milieu de transmission thermique (Wm) liquide dans le réservoir à condensat (Kb) a lieu sous l'effet de la gravité.

5. Dispositif pour mettre en oeuvre une transmission thermique selon le procédé de l'une des revendications 1 à 4, entre des adsorbeurs (Ad1, Ad2) fonctionnant en alternance dans une installation frigorifique à adsorption avec un circuit de refroidissement externe (Kw) est un circuit de chauffage externe (Hw),
**caractérisé par** un circuit de transmission thermique fermé, branché entre un premier adsorbeur (Ad1) et un second adsorbeur (Ad2) avec un milieu de transmission thermique (Wm) circulant dans celui-ci, dans lequel une transmission thermique est exécutée avec le circuit de refroidissement externe (Kw) dans le circuit de transmission thermique via un premier contact thermique, et une transmission thermique est exécutée avec le circuit de chauffage externe (Hw) via un second contact thermique,
dans lequel
un agencement tubulaire thermique avec le milieu de transmission thermique (Wm) circulant dans celui-ci est thermiquement couplé avec le circuit de refroidissement externe (Kw) et le circuit de chauffage externe (Hw).

6. Dispositif selon la revendication 5,
**caractérisé en ce que** l'agencement tubulaire thermique comprend les composants suivants : un premier contact thermique, en contact thermique avec le circuit de refroidissement (Kw), un second contact thermique, relié au premier contact thermique, en contact thermique avec le circuit de chauffage (Hw), une première unité à valve (V1) entre le premier adsorbeur (Ad1), le second adsorbeur (Ad2) et le second contact thermique, et une seconde unité à valve (V2) entre le premier adsorbeur, le second adsorbeur et le premier contact thermique.

7. Dispositif selon l'une des revendications 5 ou 6, **caractérisé en ce que** le premier contact thermique est le condenseur (Kd) et le second contact thermique est l'évaporateur (Vd).

8. Dispositif selon la revendication 7,
**caractérisé par** un réservoir à condensat (Kd) branché entre le condenseur (Kd) et l'évaporateur (Vd).

9. Dispositif selon l'une des revendications 5 à 8,
**caractérisé par** une troisième valve (V3) agencée entre le condenseur (Kd) et le réservoir à condensat (Kb), et par une quatrième valve (V4) agencée entre le réservoir à condensat et l'évaporateur (Vd.

10. Dispositif selon la revendication 6 à 9,
**caractérisé en ce que** les unités à valve (V1, V2, V3, V4) réalisent les états de valve suivants, qui se répètent de façon cyclique :
- premier état de valve : liaison ouverte entre l'évaporateur (Vd) et le premier adsorbeur (Ad1), liaison ouverte entre le second adsorbeur (Ad2) et le condenseur (Kd)
- second état de valve : liaison ouverte entre le premier adsorbeur et le second adsorbeur, liaison ouverte entre le condenseur (Kd) et/ou le réservoir à condensat (Kb) et l'évaporateur (Vd),
- troisième état de valve : liaison ouverte entre l'évaporateur (Vd) et le second adsorbeur (Ad2), liaison ouverte entre le premier adsorbeur (Ad1) et le condenseur (Kd),
- quatrième état de valve : égal au second état de valve.

11. Dispositif selon la revendication 10,
**caractérisé en ce que** dans le premier et dans le troisième état de valve, une liaison entre le condenseur (Kd) et le réservoir à condensat (Kb) est ouverte.

12. Dispositif selon la revendication 6,
**caractérisé en ce que** la première unité de valve (V1) et/ou la seconde unité de valve (V2) sont réalisées sous forme de valve commandée à trois voies.

13. Dispositif selon l'une des revendications 9 à 12,
**caractérisé en ce que** la troisième valve (V3) est une valve commandée à trois voies.
